# FASCICULE DE BREVET EUROPEEN

(11) **EP 3 178 237 B1**
(45) Date de publication et mention de la délivrance du brevet: **23.08.2023**
(21) Numéro de dépôt: 15759512.5
(22) Date de dépôt: 22.07.2015
(51) Int. Cl.: H04N 21/482, G06F 3/04817, G06F 3/04842, G06F 3/0485

(54) **INTERFACE PERFECTIONNÉE D'ACCÈS À DES PROGRAMMES DE TÉLÉVISION**
VERBESSERTE SCHNITTSTELLE ZUM ZUGRIFF AUF FERNSEHPROGRAMME
IMPROVED INTERFACE FOR ACCESSING TELEVISION PROGRAMS

(30) Priorité: 04.08.2014 FR 1457555
(43) Date de publication de la demande: 14.06.2017
(73) Titulaire: Molotov, 75007 Paris (FR)
(72) Inventeur: BLANC, Jean David, 75008 Paris (FR)
(74) Mandataire: Plasseraud IP
(86) Numéro de dépôt international: PCT/FR2015/052019
(87) Numéro de publication internationale: WO 2016/020596

(56) Documents cités:
- EP-A2- 1 558 028
- EP-A2- 2 369 841
- US-A1- 2005 204 388
- US-A1- 2006 080 703

## Description

### Domaine de l'invention

La présente invention concerne notamment un procédé mis en oeuvre par des moyens informatiques pour générer une interface d'accès à des programmes de télévision.

L'objet d'une telle interface est d'offrir une grande exhaustivité dans la présentation des programmes et des fonctionnalités associées, tout en assurant une ergonomie d'utilisation satisfaisante.

### Etat de la technique

Souvent, les programmes sont encore disponibles pour une visualisation en différé quelques jours après leur diffusion en direct. Par exemple en France, la plupart des programmes sont encore disponibles sept jours après leur date de diffusion. Ainsi, il est possible d'accéder à des contenus déjà diffusés en différé, ce qui est nommé communément « télévision de rattrapage » (ou « replay »).

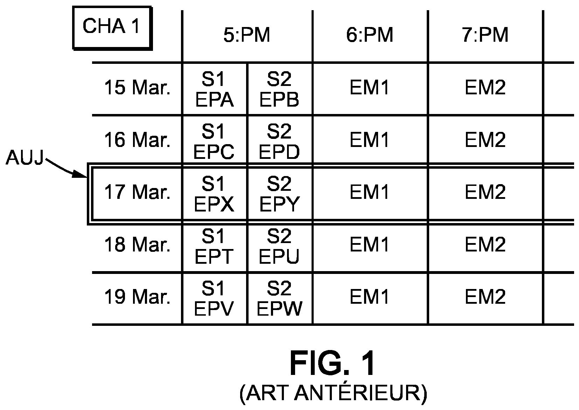

Certaines interfaces existantes proposent déjà de présenter des programmes déjà diffusés, ainsi que des programmes en cours ou futurs dans une même page d'écran. Il apparaît alors sur la figure 1 présentant l'art antérieur qu'une émission récurrente (par exemple une série télévisée S1, ou S2, ou encore des émissions récurrentes comme des bulletins Météo EM1 ou des émissions de divertissement EM2 dans l'exemple illustré) puisse apparaître plusieurs fois dans la grille de programmes (par exemple à un même horaire 5:PM - 7:PM tous les jours en semaine). Par exemple, la série télévisée S1 est représentée cinq fois sur la figure 1, pour des épisodes successifs :
- EP A et EP C (épisodes déjà diffusés antérieurement à la date du jour AUJ qui est le 17 mars dans l'exemple représenté),
- EP X (épisode en cours de diffusion actuellement, par exemple), et
- EP T et EP V (épisodes prévus pour une diffusion ultérieure, les jours suivants).

Dans l'exemple de la figure 1, seuls les contenus programmés par une même chaîne CHAI sont représentés.

Il apparaît que les vignettes associées à de tels contenus encombrent alors la grille de programmes. En particulier, lorsque la grille présente les programmes de plusieurs chaînes de télévision à la fois, avec tous les programmes passés (sur une semaine complète), ainsi que les programmes en cours et futurs, à différents horaires de la journée, l'utilisateur d'une telle interface peut difficilement l'interpréter et y naviguer.

Ce problème se pose typiquement dans les grilles de l'art antérieur comme présenté dans les documents D1 : EP2369841, D2 : EP1558028, D3 : US-2005/204388, D4 : US-2006/080703. Dans ces documents, les grilles sont biaxiales (avec un premier axe pour le temps et un deuxième axe pour les chaînes de télévision). Ainsi par exemple, les épisodes d'un programme récurrent comme une série occupent de nombreuses places dans la grille des programmes et encombrent celle-ci.

La présente invention vient améliorer la situation.

### Présentation de l'invention

Elle propose à cet effet un procédé conforme à la revendication 1.Ainsi, l'invention met en oeuvre un filtre de données pour compacter les informations à afficher sur écran, offrant ainsi un meilleur confort d'utilisation de l'interface. Cette amélioration se fonde sur un critère objectif pour un utilisateur (et non en fonction de sa subjectivité) car les données affichées sont moindres, ce qui permet de mieux maîtriser l'utilisation de l'interface.

### Modes de réalisation de l'invention

Dans un mode de réalisation avantageux où les vignettes affichées sont sélectionnables par un utilisateur de l'application, la sélection de la vignette commune précitée provoque une commande d'affichage d'une liste d'informations respectivement relatives aux contenus associés au même programme précité.

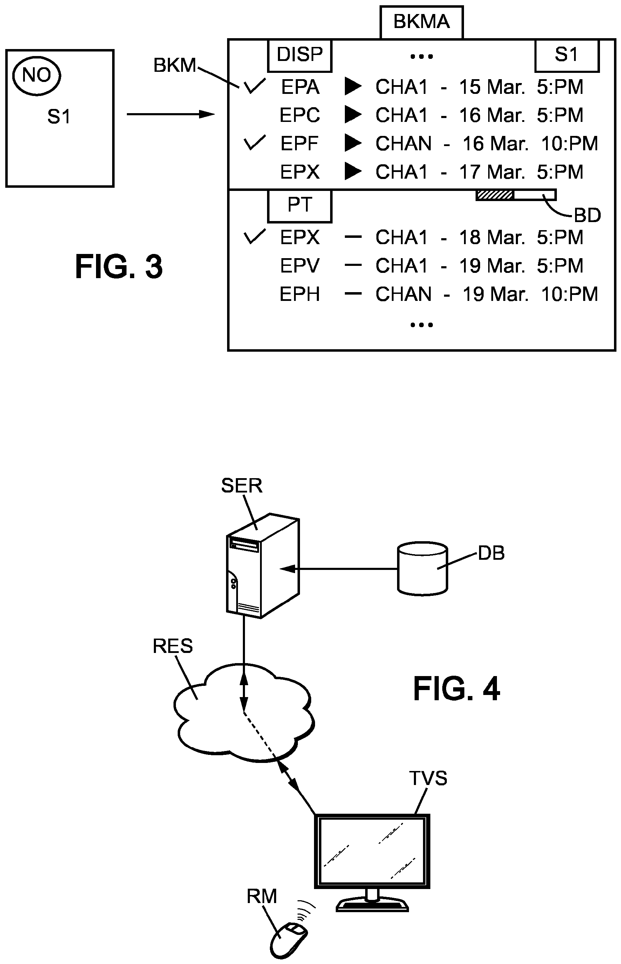

Une telle réalisation présentée plus loin en détails en référence à la figure 3, permet de compacter davantage les données présentées dans l'écran d'accueil de l'interface et d'offrir plus de détails à l'utilisateur en sélectionnant la vignette commune.

Les informations présentées après sélection de la vignette commune peuvent comporter au moins, pour chaque contenu, un titre de contenu, une horodate de diffusion du contenu, et une indication d'une chaîne de télévision diffusant ce contenu.

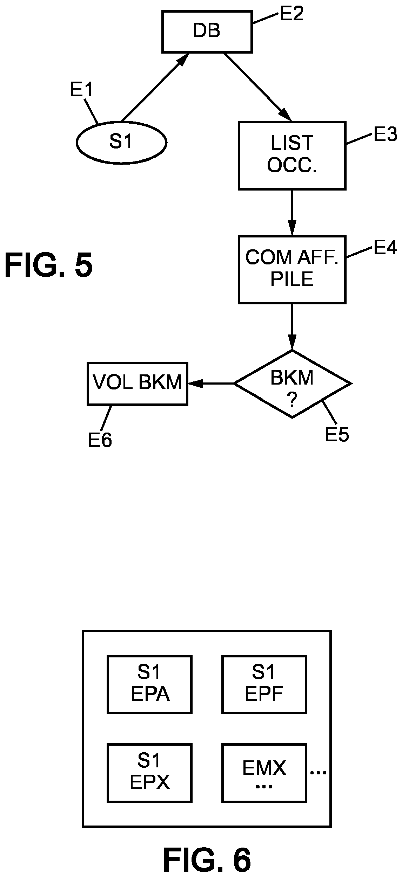

Dans une forme de réalisation avantageuse, ces informations comportent une indication de marque (ou « bookmark » en anglais) pour chaque contenu. En particulier, cette indication est sélectionnable pour marquer un contenu (par exemple pour une fonction d'enregistrement du programme), ce qui permet alors une mise à disposition de ce contenu dans un répertoire correspondant, dédié à l'utilisateur. Ce répertoire peut être par un exemple un volet de visualisation des contenus précédemment marqués comme on le verra en détails plus loin en référence à la figure 6.

En particulier, un contenu est disponible dans le répertoire précité après une horodate de début de diffusion de ce contenu. Bien entendu, le contenu ne peut pas être visualisé avant qu'il ne soit ou qu'il n'ait été diffusé en direct. Dès le début de sa diffusion, le contenu peut être accessible et il apparaît comme tel dans le volet précité de visualisation des contenus marqués.

Dans une forme de réalisation avantageuse, les informations précitées comportent une indication de marque générale de l'ensemble des contenus. En particulier, cette indication de marque générale est sélectionnable pour marquer l'ensemble des contenus par une commande unique, pour une mise à disposition de tous les contenus dans un répertoire correspondant (tel qu'un volet de visualisation). Ainsi, une telle réalisation permet de marquer tous les contenus associés à un même programme (par exemple tous les épisodes passés et futurs d'une même série télévisée, et même le cas échéant diffusés par plusieurs chaînes de télévision), et ce en une seule commande (par exemple en un seul clic de l'utilisateur).

Dans un mode de réalisation, l'application comporte un outil de navigation dans le temps, pour un affichage de vignettes de programmes sur des pages d'écran (successives en fonction du temps), l'affichage de vignettes étant ordonné en fonction d'horodates de diffusion respectives des programmes. En particulier, la vignette commune précitée est affichée à chaque page d'écran si un contenu associé est (ou a été) diffusé à une horodate correspondant à la page d'écran affichée, et plus particulièrement selon une unique occurrence passée et/ou une unique occurrence future par page d'écran.

La présente invention vise aussi un programme informatique, comportant des instructions pour la mise en oeuvre du procédé ci-avant, lorsque ce programme est exécuté par un processeur. Un exemple d'ordinogramme d'un tel programme est illustré sur la figure 5 commentée ci-après.

La présente invention vise aussi un serveur d'application de guide électronique de programmes de télévision, comportant des moyens informatiques (tels qu'un processeur et au moins une mémoire de travail) pour la mise en oeuvre du procédé ci-avant. Un tel serveur est illustré sur la figure 4 et porte la référence SER.

### Présentation des figures

D'autres caractéristiques et avantages de l'invention apparaîtront à l'examen de la description détaillée ci-après, et des dessins annexés sur lesquels :
- la figure 1 illustre un exemple d'écran d'interface d'accès à des programmes de télévision, au sens de l'art antérieur ;
- la figure 2 illustre un exemple d'écran d'interface d'accès à des programmes de télévision, avec, selon l'invention, une vignette unique pour un programme donné, et ce pour toutes les occurrences passées ou futures de ce programme ;
- la figure 3 illustre un mode de réalisation de l'invention dans lequel la sélection d'une vignette unique d'un programme sur l'écran d'interface provoque l'affichage d'une liste des occurrences associées à ce programme ;
- la figure 4 illustre schématiquement un système pour la mise en oeuvre de l'invention, faisant intervenir en particulier un serveur d'application SER au sens de l'invention ;
- la figure 5 illustre les principales étapes d'un exemple de réalisation du procédé selon l'invention ;
- la figure 6 illustre un volet de visualisation des contenus marqués par la mise en oeuvre du procédé selon un mode de réalisation de l'invention ;
- la figure 7 illustre une forme de réalisation dans laquelle un serveur au sens de l'invention pilote des opérations d'enregistrements commandés par un utilisateur.

### Description d'exemples de réalisation

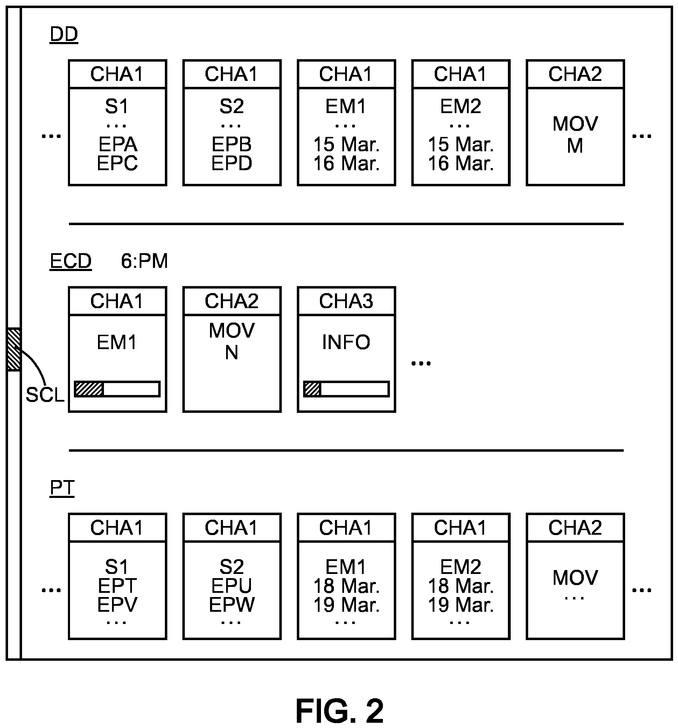

En référence à la figure 2, l'invention propose de présenter tous les contenus (présents, passés et futurs) diffusés par toutes les chaînes (CHA1, CHA2, CHA3, etc.) sur une même page d'écran mais de n'afficher qu'une unique occurrence d'une vignette associée à une même émission récurrente (une même série télévisée S1 ou S2, ou encore une même émission d'information EM1 ou de divertissement EM2), et ce :
- dans le passé DD (les programmes déjà diffusés, dits « *de rattrapage* »),
- dans le présent ECD (les programmes en cours de diffusion), avec une barre de défilement sous les vignettes correspondantes, et
- dans le futur PT (les programmes qui seront diffusés plus tard).

Dans l'exemple de la figure 2, chaque vignette affiche :
- les contenus disponibles, associés à un même programme, tel qu'une série S1, S2, où une émission EM1, EM2, et qui ont été diffusés dans le passé DD,
- ou les contenus associés à un même programme (S1, S2, EM1, EM2) et qui seront diffusés et ainsi disponibles dans le futur PT.

Il est possible pour un utilisateur de naviguer dans le temps par défilement en utilisant le bouton de défilement SCL (fonction de « scrolling ») ou directement en passant d'une journée à l'autre via une rubrique de menu temporel de l'interface (non représentée). La vignette unique d'un même programme apparaît dans chaque page du défilement s'il est prévu au moins une diffusion d'un contenu associé à ce programme dans la plage temporelle d'observation correspondant à la page en cours d'affichage. Néanmoins, il n'apparaît qu'une unique occurrence de la vignette commune si la page d'écran n'affiche que des programmes passés ou que des programmes futurs. En revanche, si la page d'écran présente à la fois des programmes passés et des programmes futurs comme illustré sur la figure 2, alors deux occurrences de la même vignette peuvent être présentes (l'une pour les contenus déjà diffusés DD, et l'autre pour les contenus diffusés plus tard PT), voire en outre une troisième occurrence si un contenu correspondant à ce programme est en cours de diffusion (ECD).

En particulier, dans l'exemple représenté, une vignette unique liste les différentes occurrences de ces contenus. Néanmoins, dans un mode de réalisation avantageux, la vignette n'affiche pas toutes les occurrences de ce programme. Ainsi, il est possible d'afficher sur la vignette de la page d'accueil de l'interface d'autres informations sur le programme, par exemple une imagette ainsi que le type du programme : une série (avec le type de série, le nom du producteur, des acteurs, etc.), ou une émission, avec le type d'émission (divertissement, culinaire, mode, reportage, etc.), ou autre. Ainsi, en référence à la figure 3, la vignette affiche, outre ces informations, le nombre d'occurrences NO passées et/ou futures, d'une émission récurrente (à gauche de la figure 3), au sens de la présente invention.

En outre, en sélectionnant cette unique vignette (par exemple avec une télécommande ou par double click ou click droit d'une souris), il s'affiche (à droite de la figure 3) une page descriptive de l'émission (reprenant le titre et le thème par exemple de la vignette, et ajoutant des détails sur les acteurs ou animateurs éventuels, etc.). Cette page comporte en particulier toutes les occurrences passées DISP, donc disponibles, et futures PT, ainsi que leur date de diffusion. Ainsi, il apparaît sur cette page une pile des programmations d'une même émission récurrente. L'utilisateur peut ainsi avoir accès, via cette liste, aux contenus déjà disponibles (en cliquant sur le bouton de lecture représenté par un triangle noir). Il peut avoir accès en outre au programme en cours de diffusion en direct (présenté dans la liste au-dessus de la barre de défilement BD). En sélectionnant ce programme, l'interface lui propose de reprendre la lecture du contenu depuis le début (en léger différé) ou, au contraire, de poursuivre la lecture du contenu en direct.

En pratique, en référence à la figure 4, un serveur SER est relié à une base de données DB répertoriant les programmes, les dates de diffusion, les informations sur les programmes, etc. Le serveur peut être relié en outre à une mémoire de stockage des contenus déjà diffusés ou en cours de diffusion. En particulier, la base de données DB est structurée par des liens entre des contenus qui sont associés entre eux, comme des épisodes d'une même série, etc. Ainsi, un écran d'affichage tel qu'un poste de télévision TVS, connecté directement ou via un « décodeur » (ou set-top box) au serveur SER (éventuellement via un réseau étendu RES) peut afficher, sur commande de l'utilisateur via la télécommande RM (ou une souris), la fiche complète relative à une émission récurrente S1, présentant les différentes occurrences passées ou futures, lorsque l'utilisateur sélectionne la vignette correspondante.

Ainsi, en référence à la figure 5, en fonction d'un programme donné S1 sélectionné à l'étape E1, le serveur interroge la base de données DB à l'étape E2 pour établir à l'étape E3 une liste des occurrences liées à ce programmes et désignant des contenus associés à ce programme, en y incluant des informations relatives à ces contenus (notamment les heures de diffusion).

Ainsi, le serveur peut envoyer au poste TVS une commande d'affichage de cette liste sous forme d'une pile d'informations sur les contenus associés à ce programme S1, à l'étape E4.

Il convient de noter que l'interrogation de la base de données n'est pas limitée à une chaîne de télévision précise. Ainsi, dans l'exemple de la figure 3, on peut relever que tous les contenus associés à un même programme S1 sont recensés, indépendamment de la chaîne qui les diffuse (CHAI ou CHAN).

En outre, comme il est possible de faire apparaître les programmations futures sur la liste précitée (par exemple les futurs épisodes d'une série), il peut être tiré avantage de cette présentation pour faire apparaître un bouton à sélectionner par l'utilisateur pour marquer (ou enregistrer) une occurrence du programme. Cette fonctionnalité d'application de marque à un contenu (ou « bookmark » en anglais) permet, en référence à la figure 6, de faire apparaître et rendre accessible à l'utilisateur tous les contenus qui ont été marqués dans un volet particulier. Ainsi, lorsque la date de diffusion de ces contenus est passée et que les contenus sont donc disponibles, l'utilisateur peut visualiser de tels contenus depuis ce volet de « bookmarks ». En référence à la figure 3 (partie de droite), l'utilisateur peut sélectionner les contenus un à un pour les marquer (référence BKM de la figure 3), ou par une commande particulière, les sélectionner tous en une seule opération. A cet effet, une rubrique d'un menu BKMA peut s'afficher en suggérant un bookmark de tous les contenus à la fois. Ainsi, en référence à la figure 5 à nouveau, en cas de sélection d'un ou plusieurs contenus pour être marqués à l'étape E5, l'information de marquage est gardée en mémoire pour afficher à l'étape E6 le ou les contenus marqués dans le volet de visualisation des bookmarks.

Ainsi, par le biais de la fonctionnalité associée à ce bookmark et des possibilités de visualisation ultérieure, l'utilisateur peut programmer un enregistrement d'une occurrence individuelle de l'émission, mais aussi et en une seule commande (par exemple un seul clic de souris), de toutes les occurrences futures (rendues disponibles après leur date de diffusion en direct), et plus généralement encore de toutes les occurrences (passées et disponibles, en cours et à venir). Par ailleurs, il est possible de faire apparaître toutes les programmations passées (disponibles dans le volet de « bookmark »), présentes et futures, d'une émission donnée, et ce indépendamment de la chaîne qui les diffuse, comme illustré sur la figure 6.

De même, dans le cas d'une programmation récurrente, il est possible de s'appuyer sur des fonctionnalités d'analyse différentielle et de reconnaissance des récurrences.

Par exemple, le traitement de l'invention peut, dans une réalisation, reconnaître des émissions en doublons (par exemple un même épisode d'une série régulièrement rediffusé sur la même chaîne ou sur plusieurs chaînes différentes). Ainsi, le procédé de marquage précité propose, en cas de sélection de l'ensemble d'une émission récurrente, une étape d'analyse de l'ensemble des épisodes diffusés et de n'enregistrer alors que la première rediffusion de chaque épisode en garantissant une unicité des programmes marqués et enregistrés. Il est évité ainsi de saturer par exemple un espace mémoire de bookmark (ou d'enregistrement) dédié pour un utilisateur donné.

En outre, par exemple, il est possible de mettre en oeuvre une fonction d'analyse différentielle par rapport au contenu déjà marqué. Ainsi, dans le cas où l'utilisateur ne serait intéressé que par de nouveaux épisodes d'un même programme à venir (par exemple de nouveaux épisodes d'une même série), il est proposé une étape d'analyse des demandes futures de marquage avec les éléments déjà marqués pour n'enregistrer que les nouveaux épisodes non enregistrés.

Le procédé de l'invention comprend alors avantageusement une étape d'identification et de suppression de doublons éventuels, en bookmark, indépendamment des rediffusions sur une même chaîne ou sur des chaînes différentes.

Ainsi, on comprendra que dans une solution de l'art antérieur, toutes ces occurrences passées auraient figuré ensemble sur une grille des programmes (comme présenté sur la figure 1), en encombrant alors une telle grille. L'invention vient alors surmonter la difficulté d'un affichage de tous les programmes passés et futurs, en particulier avec la récurrence des émissions (bulletin météo d'une même chaîne, même série diffusée par une ou plusieurs chaînes), qui, dans l'état de l'art, est lourd et rend fastidieuse la sélection des programmes. En n'affichant qu'une seule vignette pour une émission passée ou future, elle met en oeuvre un regroupement des informations de programmations passées et futures sous forme d'une pile dans une même page qui s'affiche lorsque l'on sélectionne l'une des vignettes de cette émission (figure 3). Une telle fonctionnalité augmente l'ergonomie d'utilisation, notamment lorsqu'il est possible de sélectionner toutes les émissions dans la pile d'une page correspondante pour marquer toutes les occurrences en même temps (« bookmarks »). Il s'agit donc d'une réalisation avantageuse conférant un confort technique supplémentaire à l'utilisateur, selon un critère objectif et non subjectif. L'invention rend alors plus claire une grille de programmes présents, passés et futurs, comme illustré sur la figure 2.

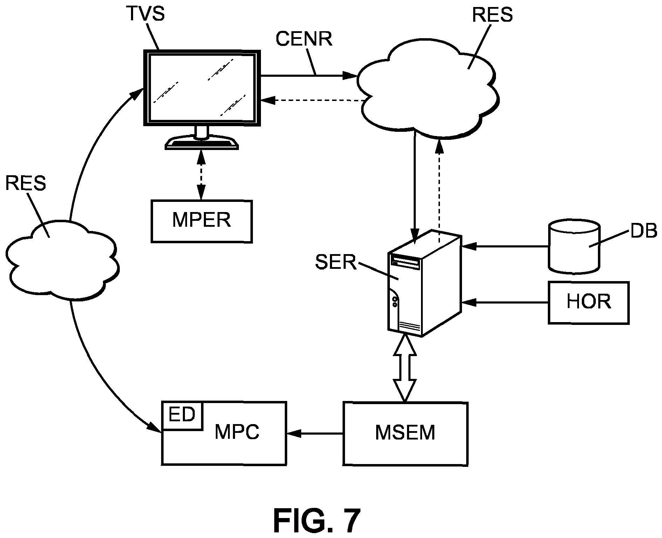

Par ailleurs, comme indiqué précédemment, l'utilisateur peut programmer un enregistrement, en une seule commande (par exemple un seul clic de souris pour marquer les contenus à enregistrer), de toutes les occurrences passées, et/ou en cours, et/ou futures d'une émission qu'il souhaite en particulier. Ainsi, en référence à la figure 7, selon une forme de réalisation possible de l'invention, une mémoire de stockage en masse MSEM de tous les contenus déjà diffusés (et donc disponibles, indistinctement) est connectée au serveur SER. Le serveur SER peut alors recevoir et traiter une telle commande d'enregistrement issue d'un poste connecté TVS d'un utilisateur. En particulier, le serveur SER peut donner suite à une telle commande d'enregistrement CENR en :
- recherchant dans la mémoire de stockage en masse MSEM les contenus déjà diffusés et disponibles relatifs à cette commande, puis en stockant ces contenus sur un espace personnel dédié ED de l'utilisateur dans une mémoire d'enregistrement : il peut s'agir d'une mémoire connectée MPC (dans le cadre d'une application de stockage dans le « cloud » accessible via le réseau RES, par exemple), ou encore d'une mémoire locale MPER directement à disposition d'un utilisateur que ce dernier connecte au réseau RES via un ordinateur, un poste de télévision connecté, ou autre (par exemple selon un choix de l'utilisateur),
- et en se référant à une horloge HOR et une table de programmes (issue par exemple de la base DB) pour obtenir des contenus correspondant à la commande d'enregistrement dès leur disponibilité immédiatement après leur diffusion, et en stockant ces contenus dans l'espace personnel de l'utilisateur ED.

A cet effet, le serveur SER peut tenir à jour une liste de commandes d'enregistrements de chaque utilisateur et piloter l'exécution des opérations d'enregistrement ci-avant.

Bien entendu, la présente invention ne se limite pas aux formes de réalisation décrites ci-avant à titre d'exemple ; elle s'étend à d'autres variantes.

Par exemple, les informations présentées sur la figure 3 et relatives à chaque contenu de la liste peuvent être plus exhaustives et comporter alors une indication du producteur de la série ou de l'émission, des acteurs de la série ou des présentateurs de l'émission, etc. Par ailleurs, des requêtes à la base de données DB permettent d'effectuer des recherches de contenus par mots-clés de titre de contenu, acteurs ou présentateurs, etc. Ainsi par exemple, il est possible en outre de lancer des commandes d'enregistrements de programmes passés et/ou futurs et qui ont été identifiés dans le cadre d'une telle recherche (par auteur, par acteur, ou autres), comme décrit ci-avant en référence à la figure 7.

Par ailleurs, on a décrit ci-avant une application d'accès à des programmes de télévision. Néanmoins, l'invention vise plus généralement une application de guide électronique de programmes de télévision, avec accès et sauvegarde, ou non, à ces programmes de télévision.

## Revendications

1. Procédé mis en oeuvre par des moyens informatiques, de gestion d'une application de guide électronique de programmes de télévision présentés sur une plage temporelle incluant un instant présent, le procédé comportant la commande d'un affichage sur écran d'une succession ordonnée dans le temps de vignettes associées à des programmes respectifs de télévision, l'affichage des vignettes étant séparé en trois sections, une section pour les vignettes associées à des programmes passés, déjà diffusés (DD) dans leur intégralité durant ladite plage temporelle, une section pour les vignettes associées à des programmes présents, en cours de diffusion (ECD), et une section pour les vignettes associées à des programmes futurs dont la diffusion n'a pas encore démarré (PT),
le procédé comportant les étapes suivantes pour chaque programme de télévision récurrent, passé et/ou futur:
- identifier (E3) des contenus associés à ce programme de télévision récurrent, et
- élaborer (E4) une commande d'affichage d'une vignette commune pour l'ensemble des contenus associés à ce programme récurrent dans une présentation de programmes passés ou futurs, l'affichage étant tel que, pour la section de vignettes associées à des programmes passés et/ou pour la section de vignettes associées à des programmes futurs, ladite vignette commune est la seule vignette affichée pour ce programme dans la section correspondante,
le procédé étant tel que chaque vignette commune affiche le nombre de contenus (NO) associés au programme récurrent correspondant à cette vignette.

2. Procédé selon la revendication 1, **caractérisé en ce que**, les vignettes affichées étant sélectionnables par un utilisateur de l'application, la sélection de la vignette commune provoque une commande d'affichage d'une liste d'informations respectivement relatives aux contenus associés audit même programme.

3. Procédé selon la revendication 2, **caractérisé en ce que** lesdites informations comportent au moins, pour chaque contenu, un titre de contenu, une horodate de diffusion du contenu, et une indication d'une chaîne de télévision diffusant ce contenu.

4. Procédé selon l'une des revendications 2 et 3, **caractérisé en ce que** les informations comportent une indication de marque (BKM) pour chaque contenu, et **en ce que** ladite indication est sélectionnable pour marquer un contenu (E5), pour une mise à disposition de ce contenu dans un répertoire correspondant (E6).

5. Procédé selon la revendication 4, **caractérisé en ce qu'**un contenu est disponible dans ledit répertoire (FIG.6) après une horodate de début de diffusion de ce contenu.

6. Procédé selon l'une des revendications 2 à 4, **caractérisé en ce que** les informations comportent une indication de marque générale (BKMA) de l'ensemble des contenus, et **en ce que** ladite indication de marque générale est sélectionnable pour marquer l'ensemble des contenus par une commande unique, pour une mise à disposition de tous les contenus dans un répertoire correspondant (E6).

7. Procédé selon la revendication 6, **caractérisé en ce qu'**il comporte les étapes :
- enregistrer dans une mémoire de stockage en masse (MSEM) indistinctement tous les contenus déjà diffusés,
- sur réception d'une commande d'enregistrement d'un ensemble de contenus marqués passés présent ou futur, rechercher dans la mémoire de stockage en masse (MSEM) les contenus déjà diffusés relatifs à ladite commande d'enregistrement, et stocker ces contenus sur un espace personnel dédié d'utilisateur (ED) dans une mémoire d'enregistrement (MPER ; MPC) ;
- et se référer au moins à une horloge (HOR) pour obtenir des contenus correspondant à ladite commande d'enregistrement dès leur disponibilité après leur diffusion, pour stocker ces contenus dans ledit espace personnel de l'utilisateur (ED).

8. Procédé selon la revendication 7, **caractérisé en ce que** l'espace personnel dédié est accessible via une application de cloud (MPC).

9. Procédé selon la revendication 7, **caractérisé en ce que** l'espace personnel dédié est accessible dans une mémoire locale (MPER) à disposition de l'utilisateur.

10. Procédé selon la revendication 6, **caractérisé en ce qu'**il comporte une étape d'identification et de suppression de contenus marqués en doublon.

11. Programme informatique, **caractérisé en ce qu'**il comporte des instructions pour la mise en oeuvre du procédé selon l'une des revendications 1 à 10, lorsque ce programme est exécuté par un processeur.

12. Serveur d'application de guide électronique de programmes de télévision, **caractérisé en ce qu'**il comporte des moyens informatiques pour la mise en oeuvre du procédé selon l'une des revendications 1 à 10.

## Patentansprüche

1. Von Informatikeinrichtungen durchgeführtes Verfahren zum Verwalten einer Anwendung zur elektronischen Führung von Fernsehprogrammen, die über einen Zeitraum, der einen aktuellen Zeitpunkt umfasst, dargeboten werden, wobei das Verfahren den Befehl eines Anzeigens einer zeitlich geordneten Reihenfolge von Vorschaubildern, die mit jeweiligen Fernsehprogrammen verknüpft sind, auf einem Bildschirm aufweist, wobei die Anzeige der Vorschaubilder in drei Sektionen unterteilt ist, nämlich eine Sektion für die Vorschaubilder, die mit vergangenen Programmen verknüpft sind, die während des Zeitraums bereits vollständig ausgestrahlt worden sind (DD), eine Sektion für die Vorschaubilder, die mit aktuellen Programmen verknüpft sind, deren Ausstrahlung zurzeit läuft (ECD), und eine Sektion für die Vorschaubilder, die mit zukünftigen Programmen verknüpft sind, deren Ausstrahlung noch nicht begonnen hat (PT),
wobei das Verfahren für jedes wiederkehrende, vergangene und/oder zukünftige Fernsehprogramm die folgenden Schritte aufweist:
- Identifizieren (E3) von Inhalten, die mit diesem wiederkehrenden Fernsehprogramm verknüpft sind, und
- Ausarbeiten (E4) eines Befehls zum Anzeigen eines gemeinsamen Vorschaubilds für die Gesamtheit der mit diesem wiederkehrenden Programm verknüpften Inhalte in einer Darstellung von vergangenen oder zukünftigen Programmen,
wobei die Anzeige derart ist, dass für die Sektion von Vorschaubildern, die mit vergangenen Programmen verknüpft sind, und/oder für die Sektion von Vorschaubildern, die mit zukünftigen Programmen verknüpft sind, das gemeinsame Vorschaubild das einzige Vorschaubild ist, das für dieses Programm in der entsprechenden Sektion angezeigt wird,
wobei das Verfahren derart ist, dass jedes gemeinsame Vorschaubild die Anzahl von Inhalten (NO) anzeigt, die mit dem wiederkehrenden Programm verknüpft sind, das diesem Vorschaubild entspricht.

2. Verfahren nach Anspruch 1, **dadurch gekennzeichnet, dass** die angezeigten Vorschaubilder von einem Nutzer der Anwendung wählbar sind, wobei die Wahl des gemeinsamen Vorschaubilds einen Befehl zum Anzeigen einer Liste von Informationen bewirkt, die sich jeweils auf Inhalte beziehen, die mit demselben Programm verknüpft sind.

3. Verfahren nach Anspruch 2, **dadurch gekennzeichnet, dass** die Informationen für jeden Inhalt zumindest einen Titel des Inhalts, Zeitpunkt der Ausstrahlung des Inhalts und eine Angabe eines diesen Inhalt ausstrahlenden Fernsehkanals aufweisen.

4. Verfahren nach einem der Ansprüche 2 und 3, **dadurch gekennzeichnet, dass** die Informationen ein Lesezeichen (BKM) für jeden Inhalt aufweisen, und dadurch, dass das Zeichen wählbar ist, um einen Inhalt (E5) zu markieren, um diesen Inhalt in einem entsprechenden Verzeichnis (E6) bereitzustellen.

5. Verfahren nach Anspruch 4, **dadurch gekennzeichnet, dass** nach einem Zeitpunkt eines Ausstrahlungsbeginns eines Inhalts dieser Inhalt in dem Verzeichnis (FIG. 6) verfügbar ist.

6. Verfahren nach einem der Ansprüche 2 bis 4, **dadurch gekennzeichnet, dass** die Informationen ein allgemeines Lesezeichen (BKMA) der Gesamtheit der Inhalte aufweisen, und dadurch, dass das allgemeine Lesezeichen wählbar ist, um für eine Bereitstellung aller Inhalte in einem entsprechenden Verzeichnis (E6) die Gesamtheit der Inhalte mit einem einzigen Befehl zu markieren.

7. Verfahren nach Anspruch 6, **dadurch gekennzeichnet, dass** es die Schritte aufweist:
- Registrieren von allen bereits ausgestrahlten Inhalten unterschiedslos in einem Massenspeicher (MSEM),
- auf Empfang eines Befehls zum Registrieren einer aktuellen oder zukünftigen Gesamtheit von markierten vergangenen Inhalten, Suchen der bereits ausgestrahlten Inhalte, die sich auf den Registrierungsbefehl beziehen, in dem Massenspeicher (MSEM) und Speichern dieser Inhalte auf einem nutzerdedizierten persönlichen Bereich (ED) in einem Registrierungsspeicher (MPER; MPC);
- und Bezugnehmen zumindest auf eine Uhr (HOR), um Inhalte, die dem Registrierungsbefehl entsprechen, ab ihrer Verfügbarkeit nach ihrer Ausstrahlung zu erlangen, um diese Inhalte in dem persönlichen Bereich des Nutzers (ED) zu speichern.

8. Verfahren nach Anspruch 7, **dadurch gekennzeichnet, dass** der dedizierte persönliche Bereich über eine Cloud-Anwendung (MPC) zugreifbar ist.

9. Verfahren nach Anspruch 7, **dadurch gekennzeichnet, dass** der dedizierte persönliche Bereich in einem dem Nutzer zur Verfügung stehenden lokalen Speicher (MPER) zugreifbar ist.

10. Verfahren nach Anspruch 6, **dadurch gekennzeichnet, dass** es einen Schritt einer Identifikation und Unterdrückung von doppelt markierten Inhalten aufweist.

11. Informatikprogramm, **dadurch gekennzeichnet, dass** es Anweisungen zum Implementieren des Verfahrens nach einem der Ansprüche 1 bis 10, wenn dieses Programm von einem Prozessor ausgeführt wird, aufweist.

12. Server für elektronische Fernsehprogrammführer-Anwendung, **dadurch gekennzeichnet, dass** er Informatikeinrichtungen zum Implementieren des Verfahrens nach einem der Ansprüche 1 bis 10 aufweist.

## Claims

1. A method implemented by computer means, for managing an electronic television programme guide application presented over a time range including a present moment, the method including commanding an on-screen display of a succession ordered in time of thumbnails associated with respective television programmes, the display of the thumbnails being separated into three sections, a section for the thumbnails associated with past programmes, already broadcast (AB) in their entirety during said time range, a section for the thumbnails associated with present programmes, currently being broadcast (CBB), and a section for the thumbnails associated with future programmes whose broadcast has not yet started (L),
the method including the following steps for each recurring past and/or future television programme:
- identifying (E3) contents associated with this recurring television programme, and
- developing (E4) a command for displaying a common thumbnail for all the contents associated with this recurring programme in a presentation of past or future programmes,
the display being such that, for the section of thumbnails associated with past programmes and/or for the section of thumbnails associated with future programmes, said common thumbnail is the only thumbnail displayed for this programme in the corresponding section,
the method being such that each common thumbnail displays the number of contents (NO) associated with the recurring programme corresponding to this thumbnail.

2. The method according to claim 1, **characterised in that**, the thumbnails displayed being able to be selected by a user of the application, the selection of the common thumbnail causes a command to display a list of information respectively relating to the contents associated with said same programme.

3. The method according to claim 2, **characterised in that** said information includes at least, for each content, a content title, a time stamp of the broadcast of the content, and an indication of a television channel broadcasting this content.

4. The method according to one of claims 2 and 3, **characterised in that** the information includes a bookmark (BKM) for each content, and **in that** said bookmark can be selected to mark a content (E5), for making this content available in a corresponding directory (E6).

5. The method according to claim 4, **characterised in that** a content is available in said directory (FIG.6) after a time stamp of the start of broadcasting of this content.

6. The method according to one of claims 2 to 4, **characterised in that** the information includes a general bookmark (BKMA) of all the contents, and **in that** said general bookmark can be selected to mark all the contents by a single command, for making all contents available in a corresponding directory (E6).

7. The method according to claim 6, **characterised in that** it includes the steps:
- recording in a mass storage memory (MSEM) indiscriminately all the contents already broadcast,
- upon receiving a command to record a set of past, present or future marked contents, searching in the mass storage memory (MSEM) for the contents already broadcast relating to said recording command, and storing these contents on a dedicated user personal space (ED) in a recording memory (MPER; MPC);
- and referring to at least one clock (HOR) to obtain contents corresponding to said recording command as soon as they are available after their broadcast, to store these contents in said user personal space (ED).

8. The method according to claim 7, **characterised in that** the dedicated personal space is accessible via a cloud application (MPC).

9. The method according to claim 7, **characterised in that** the dedicated personal space is accessible in a local memory (MPER) available to the user.

10. The method according to claim 6, **characterised in that** it includes a step of identifying and deleting duplicate marked contents.

11. A computer program, **characterised in that** it includes instructions for implementing the method according to one of claims 1 to 10, when this program is executed by a processor.

12. An electronic television programme guide application server, **characterised in that** it includes computer means for implementing the method according to one of claims 1 to 10.
